# FASCICULE DE BREVET EUROPEEN

(11) **EP 0 988 446 B1**
(45) Date de publication et mention de la délivrance du brevet: **07.04.2004**
(21) Numéro de dépôt: 99913365.5
(22) Date de dépôt: 09.04.1999
(51) Int. Cl.: F02K 1/00, F02K 9/84

(54) **DISPOSITIF D'ANCRAGE POUR UN ORGANE D'ACTIVATION DE TUYERE ORIENTABLE**
VERANKERUNGSVORRICHTUNG FÜR EINE BETÄTIGUNGSEINRICHTUNG EINER SCHWENKBAREN SCHUBDÜSE
DEVICE FOR ANCHORING A MEMBER ACTIVATING AN ADJUSTABLE NOZZLE

(30) Priorité: 09.04.1998 FR 9804437
(43) Date de publication de la demande: 29.03.2000
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: BERDOYES, Michel, F-33610 Cestas (FR); CAMY, Pierre, F-33160 Saint Médard en Jalles (FR)
(74) Mandataire: Joly, Jean-Jacques
(86) Numéro de dépôt international: PCT/FR1999/000819
(87) Numéro de publication internationale: WO 1999/053185

(56) Documents cités:
- DE-A- 2 350 103
- FR-A- 1 554 059
- US-A- 3 188 961
- US-A- 3 361 362
- US-A- 3 390 899
- US-A- 3 436 021
- US-A- 3 604 628
- US-A- 3 659 788
- US-A- 3 860 134
- US-A- 4 452 038
- US-A- 4 477 025

## Description

### Domaine de l'invention

L'invention concerne d'une façon générale les propulseurs à tuyère orientable. Elle vise plus particulièrement l'ancrage d'un organe d'activation sur la paroi du divergent de la tuyère pour permettre l'orientation de celle-ci dans une direction voulue.

### Arrière-plan de l'invention

Dans un propulseur à tuyère orientable, l'orientation de la tuyère est commandée par des organes d'activation, par exemple des vérins, qui sont reliés à la tuyère par liaison pivotante d'une de leurs extrémités avec la paroi du divergent de la tuyère.

De façon générale, l'ancrage d'un organe d'activation sur la tuyère est réalisé par l'intermédiaire d'un anneau d'activation qui ceinture le divergent, afin de conférer la rigidité souhaitable et d'introduire une isolation thermique entre la paroi du divergent et une ferrure d'ancrage fixée sur l'anneau d'activation, voir par exemple le document US-A-4 477 025.

Cette solution est coûteuse, notamment lorsque, pour des raisons de limitation de masse et d'isolation thermique renforcée, l'anneau d'activation est en un matériau composite thermostructural, par exemple en composite carbone/carbone (C/C). En outre, il est nécessaire de bloquer l'anneau d'activation en translation axiale et en rotation. Le blocage en translation peut être réalisé au moyen d'un écrou vissé sur le divergent, ce qui ajoute une autre pièce de grande dimension.

### Objets et résumé de l'invention

L'invention a pour but de fournir un dispositif d'ancrage qui ne requiert par l'emploi de pièces de grandes dimensions coùteuses et de masse non négligeable.

L'invention a aussi pour but de fournir un dispositif d'ancrage qui garantit, pendant toute la mission d'un propulseur, un maintien de la référence géométrique du point d'ancrage de l'organe d'activation, afin de conserver une parfaite précision de l'orientation de la tuyère, et respecter la loi de pilotage du propulseur en dépit de dilatations différentielles d'origine thermique.

L'invention a encore pour but de fournir un dispositif d'ancrage permettant une bonne isolation thermique entre la tuyère et le point d'ancrage de l'organe d'activation.

Ces buts peuvent être atteints grâce à un dispositif d'ancrage pour un organe d'activation d'un divergent de tuyère orientable, comprenant au moins une ferrure pour permettre une liaison avec un organe d'activation et des moyens de montage de la ferrure sur le divergent, dispositif dans lequel les moyens de montage comportent au moins un insert destiné à être disposé et immobilisé dans la paroi d'un divergent, et des moyens de fixation de la ferrure sur le ou les inserts, les moyens de fixation comprenant au moins un élément élastiquement déformable destiné à compenser d'éventuelles variations dimensionnelles d'origine thermique pour maintenir un effort de placage de la ferrure sur un divergent.

Avantageusement, le ou les inserts sont en un matériau thermiquement isolant, par exemple en matériau composite thermostructural.

Selon une particularité du dispositif d'ancrage, les moyens de fixation comprennent un élément d'appui qui est relié à l'insert ou aux inserts de manière à comprimer l'élément élastiquement déformable disposé entre l'élément d'appui et la ferrure.

Selon une autre particularité, une cale est interposée entre la ferrure et la surface extérieure du divergent. Cette cale est avantageusement en un matériau thermiquement isolant.

D'autres particularités et avantages d'un dispositif d'ancrage conforme à l'invention ressortiront à la lecture de la description détaillée faite ci-après.

### Brève description des dessins

- la figure 1 est une vue en demi-coupe méridienne d'une tuyère de propulseur équipée de dispositifs d'ancrage conformes à l'invention ;
- la figure 2 est une vue agrandie du dispositif d'ancrage en coupe selon le plan II-II de la figure 1 ; et
- les figures 3 et 4 sont des vues en coupe selon les plans III-III et IV-IV de la figure 2.

### Description détaillée d'un mode de réalisation

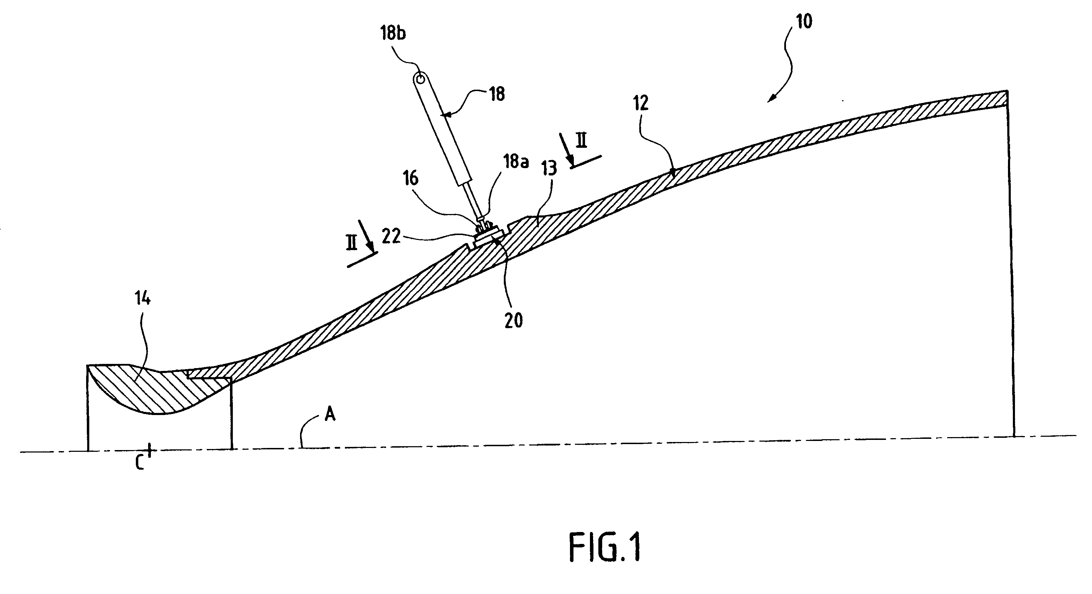

La figure 1 montre une tuyère 10 comprenant un divergent 12 fixé, par exemple par vissage, sur une pièce 14 formant col. De façon bien connue en soi, le col de tuyère est relié à la structure de fond d'un propulseur (non représenté) par une butée flexible autorisant un pivotement de la tuyère autour d'un centre de rotation C situé sur l'axe A de la tuyère. Le divergent 12 est généralement en matériau composite. En particulier, le divergent 12 peut être en matériau composite thermostructural, tel qu'un composite carbone/carbone (renfort fibreux en carbone densifié par une matrice carbone) ou un composite à matrice céramique (renfort fibreux réfractaire, par exemple en fibres de carbone ou de céramique, densifié par une matrice céramique).

Plusieurs dispositifs d'ancrage pour des organes d'activation sont montés sur le divergent. Sur la figure 1, un seul dispositif d'ancrage 20 est montré. Afin d'orienter la tuyère dans toute direction voulue, au moins deux dispositifs d'ancrage sont prévus ayant des positions angulaires autour de l'axe A espacées l'une de l'autre d'un angle différent de 180°, par exemple égal à 90°.

Les dispositifs d'ancrage 20 sont disposés à un niveau du divergent où celui-ci présente une plus grande épaisseur de paroi, cette plus grande épaisseur résultant d'une augmentation progressive de l'épaisseur de paroi.

Chaque dispositif d'ancrage 20 comprend une ferrure de timonerie métallique 22 qui supporte un axe 16 permettant une liaison pivotante avec une extrémité 18a d'un organe d'activation 18. Dans l'exemple illustré, l'organe d'activation 18 est un vérin dont l'autre extrémité 18b est montée pivotante sur un support (non représenté) solidaire du corps du propulseur.

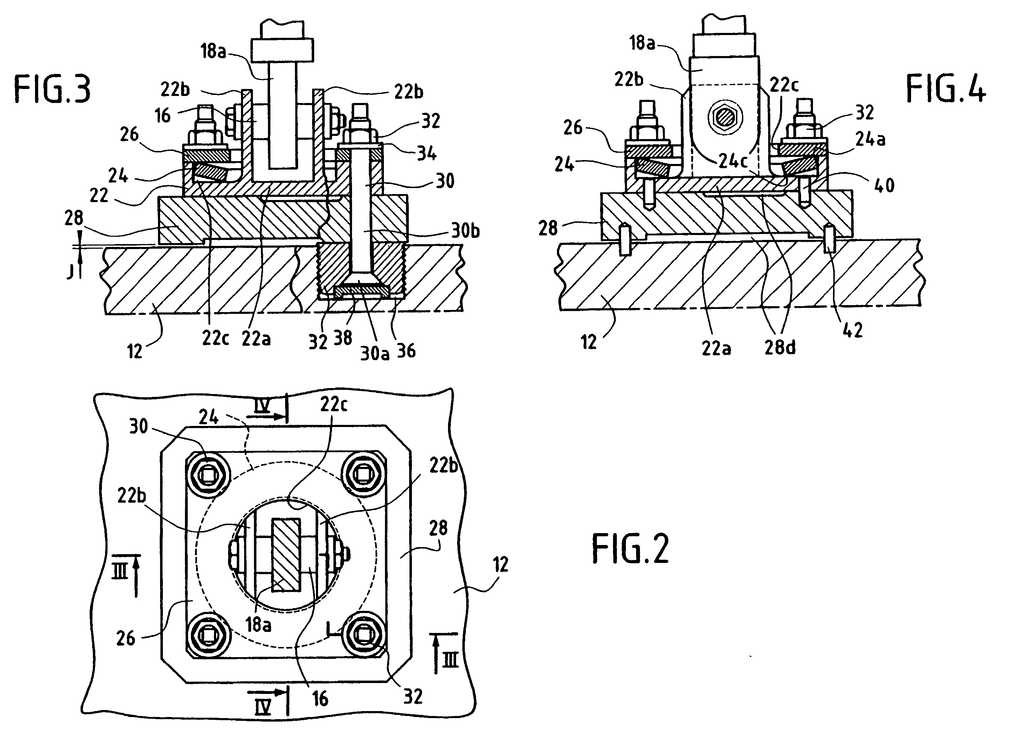

Les figures 2 à 4 illustrent de façon plus détaillée un mode de réalisation aujourd'hui préféré d'un dispositif d'ancrage 20.

La ferrure 22 comprend une embase sensiblement rectangulaire 22a. L'axe 16 est supporté par deux flasques 22b qui font saillie à la partie centrale de l'embase 22a. Un logement circulaire 22c est formé à partir de la surface supérieure de l'embase 22a, autour des flasques 22b.

Un élément élastiquement déformable 24 constitué par un anneau métallique est disposé dans le logement 22c. L'anneau 24 a des faces de forme tronconique formant un angle non nul avec la normale à l'axe A du logement 22c.

Les dimensions et la forme de l'anneau 24 sont choisies pour qu'à l'état libre l'anneau 24 fasse saillie au-dessus de la surface de l'embase 22a par un de ses bords supérieurs, par exemple le bord externe 24a.

L'anneau 24 est comprimé à l'intérieur du logement 22c au moyen d'un élément d'appui 26 sous forme d'une contre-plaque appliquée contre la surface supérieure de l'embase 22a. De la sorte, l'anneau 24 s'appuie par son bord supérieur externe 24a contre la contre-plaque 26 et par son bord inférieur interne 24c contre l'embase 22a, au fond du logement 22c, en étant élastiquement déformé.

Une cale 28 est interposée entre la ferrure 22 et le divergent 12.

L'application de la contre-plaque 26 sur la ferrure 22 et l'application de la ferrure 22 et de la cale 28 sur le divergent 12 sont réalisées au moyen de boulons 30 et écrous 31. Les boulons 30 ont leur tête 30a qui s'appuie dans un lamage ou fraisure formé dans un insert 32 inséré et bloqué dans la paroi du divergent 12 et leur tige 30b qui traverse la cale 28, l'embase 22a et la contre-plaque 26. Les écrous 31 sont vissés aux extrémités des tiges 30b et s'appuient sur l'embase 22a par l'intermédiaire de rondelles métalliques 34.

Chaque insert 32 est une pièce de forme cylindrique immobilisée dans un logement borgne 36 formé dans l'épaisseur du divergent 12, à partir de sa surface extérieure. Chaque insert est par exemple vissé et collé dans son logement 36. Une coupelle 38 placée en partie inférieure de chaque insert 32 recouvre la tête de boulon 30a.

Les inserts 32 font légèrement saillie au-dessus de la surface extérieure du divergent 12, et la cale 28 s'appuie sur les faces extérieures des inserts, ménageant un jeu J avec la surface du divergent.

Des pions 40, par exemple au nombre de deux, sont logés dans des trous borgnes alignés pratiqués dans les faces en contact de la cale 28 et de l'embase 22a. D'autres pions 42, par exemple également au nombre de deux, sont logés dans des trous borgnes alignés pratiqués dans les faces en regard de la cale 28 et du divergent 12.

En fonctionnement, les gaz éjectés à travers la tuyère provoquent un échauffement important de la paroi du divergent 12. Cette paroi est en un matériau composite ayant un coefficient de dilatation thermique différent de celui du matériau métallique de la ferrure. Il est donc nécessaire de protéger les éléments du dispositif d'ancrage, notamment la ferrure 22, contre un échauffement excessif et de compenser des dilatations différentielles. Il est important aussi, en dépit de ces dilatations différentielles, de maintenir la ferrure 22 appliquée contre le divergent pour éviter une dérive de position du point d'ancrage de l'organe d'activation, et, par-là même, éviter une imprécision d'orientation de la tuyère à partir des consignes de pilotage.

Ainsi, la cale 28 a pour fonction d'isoler thermiquement la ferrure 22 du divergent 12. La cale 28 est avantageusement en matériau composite thermostructural, tel qu'un composite carbone/carbone (C/C) ou un composite à matrice céramique (CMC). La fonction d'isolation thermique de la cale 28 pourra être renforcée par l'usinage d'évidements 28a, 28b dans ses faces en regard de la paroi du divergent 12 et de l'embase 22a.

Les boulons 30 et écrous 31 sont en métal ou alliage métallique de préférence réfractaire et à faible coefficient de dilatation thermique. Il est toutefois souhaitable de les isoler thermiquement par rapport au divergent 12. Cette isolation est apportée par les inserts 32, qui sont avantageusement en composite C/C ou CMC, de même que les coupelles 38 qui protègent les têtes 30a.

La ferrure 22, la contre-plaque 26 et l'anneau 24 sont en un métal ou alliage métallique résistant à la chaleur, par exemple en un alliage de type "Inconel®", tel que l'alliage commercialisé sous la référence "Haynes® Alloy No 718" par la société des Etats-Unis d'Amérique Haynes International Inc., Kokomo, Indiana. Les rondelles 34 peuvent également être réalisées dans le même alliage. D'autres métaux ou alliages métalliques réfractaires peuvent être envisagés

Le montage utilisé permet, même en cas de dilatation des éléments métalliques, de maintenir la ferrure 22 appliquée contre le divergent 12, grâce à la pré-contrainte élastique exercée sur l'anneau 24. Celui-ci permet donc une régulation de l'effort de placage sur le divergent.

Les pions 40, 42 peuvent être réalisés en un matériau identique ou semblable à celui des boulons 30 et écrous 31. Lorsqu'un effort de braquage est appliqué à la tuyère au moyen de l'organe d'activation relié à la ferrure 22, les pions 40, 42 reprennent l'effort de glissement induit. Ils évitent donc un glissement ou rotation de la ferrure 22 ou de la cale 28. En outre, les pions 40, 42, en reprenant les efforts de cisaillement, limitent les sollicitations des boulons 30 essentiellement à la traction.

L'application de la cale 28 sur les inserts 32 et non directement sur la paroi du divergent permet de limiter les efforts en cisaillement sur les filetages des inserts.

La surépaisseur du divergent 12 au niveau de l'implantation des dispositifs d'ancrage 20 permet d'accroître la rigidité au niveau des points d'application des organes d'activation, donc d'éviter des déformations pouvant nuire au comportement de la tuyère et à la précision du pilotage de l'orientation de celle-ci.

Différentes variantes pourront être apportées au mode de réalisation décrit ci-avant. Ainsi, l'anneau 24 pourra être remplacé par plusieurs éléments élastiquement déformables, par exemple des rondelles disposées dans des logements ménagés dans l'embase aux niveaux où celle-ci est traversée par les boulons 30. Par ailleurs, l'ancrage des têtes des boulons pourra être réalisé dans un insert unique fixé dans la paroi du divergent et sur lequel la cale 28 pourra s'appuyer.

## Revendications

1. Dispositif d'ancrage pour un organe d'activation de divergent de tuyère orientable, comprenant au moins une ferrure (22) pour permettre une liaison avec un organe d'activation (18) et des moyens de montage de la ferrure sur un divergent,
**caractérisé en ce que** les moyens de montage comportent au moins un insert (32) destiné à être disposé et immobilisé dans la paroi d'un divergent, et des moyens de fixation comprenant au moins un élément élastiquement déformable (24) destiné à compenser d'éventuelles variations dimensionnelles d'origine thermique pour maintenir un effort de placage de la ferrure sur un divergent.

2. Dispositif selon la revendication 1, **caractérisé en ce que** le ou chaque insert (32) est en un matériau thermiquement isolant.

3. Dispositif selon la revendication 2, **caractérisé en ce que** le ou chaque insert (32) est en un matériau composite thermostructural.

4. Dispositif selon l'une quelconque des revendications 1 à 3,
**caractérisé en ce que** les moyens de fixation comprennent un élément d'appui (26) qui est relié à l'insert ou à chaque insert (32) de manière à comprimer le ou chaque élément élastiquement déformable entre l'élément d'appui (26) et la ferrure (22).

5. Dispositif selon l'une quelconque des revendications 1 à 4,
**caractérisé en ce que** le ou chaque élément élastiquement déformable (24) est disposé dans un logement (22c) formé dans la ferrure (22).

6. Dispositif selon l'une quelconque des revendications 1 à 5,
**caractérisé en ce qu'**il comprend une cale (28) destinée à être interposée entre la ferrure (22) et la paroi d'un divergent.

7. Dispositif selon la revendication 6, **caractérisé en ce que** la cale (28) est en un matériau thermiquement isolant.

8. Dispositif selon la revendication 7, **caractérisé en ce que** la cale (28) est en un matériau composite thermostructural.

9. Dispositif selon l'une quelconque des revendications 6 à 8,
**caractérisé en ce que** la cale (28) repose sur le ou chaque insert (32).

10. Tuyère orientable ayant un divergent muni d'au moins un dispositif d'ancrage selon l'une quelconque des revendications 1 à 9, **caractérisée en ce que** le ou chaque insert (32) est disposé dans une zone du divergent (12) où la paroi de celui-ci présente une épaisseur plus importante que dans d'autres zones du divergent.

11. Tuyère orientable selon la revendication 10, **caractérisée en ce que** la zone de paroi d'épaisseur plus importante se raccorde progressivement aux zones voisines de moindre épaisseur.

12. Tuyère orientable selon l'une quelconque des revendications 10 et 11, **caractérisée en ce que** le ou chaque insert (32) est vissé et collé à l'intérieur d'un logement formé dans la paroi du divergent (12).

## Patentansprüche

1. Verankerungsvorrichtung für ein Stellglied eines Divergenzbereichs einer orientierbaren Düse, aufweisend mindestens einen Beschlag (22), um eine Verbindung mit einem Stellglied (18) und einer Befestigungseinrichtung des Beschlags auf dem Divergenzbereich zu ermöglichen, **dadurch gekennzeichnet, dass** die Befestigungseinrichtung mindestens einen Einsatz 32 aufweist, der dazu bestimmt ist, in der Wand des Divergenzbereichs angeordnet und befestigt zu sein, und eine Fixierungseinrichtung, welche mindestens ein elastisch verformbares Element (24) aufweist, das dazu bestimmt ist, eventuelle thermisch verursachte Dimensionsänderungen auszugleichen, um einen Anpressdruck des Beschlags gegen den Divergenzbereich aufrecht zu erhalten.

2. Vorrichtung nach Anspruch 1, **dadurch gekennzeichnet, dass** der oder jeder Einsatz (32) aus einem wärmeisolierenden Material ist.

3. Vorrichtung nach Anspruch 2, **dadurch gekennzeichnet, dass** der oder jeder Einsatz (32) aus einem warmfesten Verbundmaterial ist.

4. Vorrichtung nach einem der Ansprüche 1 bis 3, **dadurch gekennzeichnet, dass** die Befestigungseinrichtung ein Stützelement (26) aufweist, welches mit dem oder jedem Einsatz (32) derart verbunden ist, dass das oder jedes elastisch verformbare Element (24) zwischen dem Stützelement (26) und dem Beschlag (22) komprimiert wird.

5. Vorrichtung nach einem der Ansprüche 1 bis 4, **dadurch gekennzeichnet, dass** das oder jedes elastisch verformbare Element (24) in einer Ausnehmung (22c) angeordnet ist, welches in dem Beschlag (22) gebildet ist.

6. Vorrichtung nach einem der Ansprüche 1 bis 5, **dadurch gekennzeichnet, dass** sie ein Distanzstück (28) aufweist, welches dazu bestimmt ist, zwischen dem Beschlag (22) und der Wand des Divergenzbereichs angeordnet zu sein.

7. Vorrichtung nach Anspruch 6, **dadurch gekennzeichnet, dass** das Distanzstück (28) aus einem wärmeisolierenden Material ist.

8. Vorrichtung nach Anspruch 7, **dadurch gekennzeichnet, dass** das Distanzstück (28) aus einem warmfesten Verbundmaterial ist.

9. Vorrichtung nach einem der Ansprüche 6 bis 8, **dadurch gekennzeichnet, dass** das Distanzstück (28) auf dem oder auf jedem Einsatz (32) ruht.

10. Orientierbare Düse mit einem Divergenzbereich, welcher mit mindestens einer Verankerungsvorrichtung gemäß einem der Ansprüche 1 bis 9 ausgestattet ist, **dadurch gekennzeichnet, dass** der oder jeder Einsatz (32) in einem Bereich des Divergenzbereichs (12) angeordnet ist, in welchem die Wand des Divergenzbereichs eine größere Dicke aufweist als in den anderen Bereichen des Divergenzbereichs.

11. Orientierbare Düse nach Anspruch 10, **dadurch gekennzeichnet, dass** der Bereich der Wand mit größerer Dicke progressiv übergeht in die benachbarten Bereiche mit geringerer Dicke.

12. Orientierbare Düse nach einem der Ansprüche 10 oder 11, **dadurch gekennzeichnet, dass** der oder jeder Einsatz (32) in eine Ausnehmung eingeschraubt und eingeklebt ist, welches in der Wand des Divergenzbereichs (12) gebildet ist.

## Claims

1. An anchor device for an actuator member for steering the diverging portion of a nozzle, the anchor device comprising at least one fitting (22) to provide a link with an actuator member (18) and mounting means for mounting the fitting on the diverging portion,
the device being **characterised in that** the mounting means comprise at least one insert (32) designed to be placed and held in the wall of a diverging portion, and fixing means comprising at least one elastically-deformable element (24) designed to compensate for any dimensional variations of thermal origin so as to maintain a force pressing the fitting against a diverging portion.

2. A device according to claim 1, **characterised in that** the or each insert (32) is made of a thermally-insulating material.

3. A device according to claim 2, **characterised in that** the or each insert (32) is made of a thermostructural composite material.

4. A device according to any one of claims 1 to 3, **characterised in that** the fixing means comprise a thrust element (26) which is connected to the insert or to each insert (32) in such a manner as to compress the or each elastically-deformable element between the thrust element (26) and the fitting (22).

5. A device according to any one of claims 1 to 4, **characterised in that** the or each elastically-deformable element (24) is disposed in a recess (22c) formed in the fitting (22).

6. A device according to any one of claims 1 to 5, **characterised in that** it includes a spacer (28) to be interposed between the fitting (22) and the wall of a diverging portion.

7. A device according to claim 6, **characterised in that** the spacer (28) is made of a thermally-insulating material.

8. A device according to claim 7, **characterised in that** the spacer (28) is made of a thermostructural composite material.

9. A device according to any one of claims 6 to 8, **characterised in that** the spacer (28) rests on the or each insert (32).

10. A steerable nozzle having a diverging portion provided with at least one anchor device according to any one of claims 1 to 9, **characterised in that** the or each insert (32) is disposed in a zone of the diverging portion (12) where the wall thereof is of thickness greater than in other zones of the diverging portion.

11. A steerable nozzle according to claim 10, **characterised in that** the zone of greater wall thickness connects progressively with adjacent zones of lesser thickness.

12. A steerable nozzle according to claim 10 or 11, **characterised in that** the or each insert (32) is screwed and glued inside a housing formed in the wall of the diverging portion (12).
